# EUROPÄISCHE PATENTANMELDUNG

(11) **EP 4 450 231 A1**
(43) Veröffentlichungstag der Anmeldung: **23.10.2024**
(21) Anmeldenummer: 24163324.7
(22) Anmeldetag: 13.03.2024
(51) Int. Cl.: B25F 5/00

(54) **ELEKTRISCHES ARBEITSGERÄT**

(30) Priorität: 14.03.2023 DE 102023106399
(71) Anmelder: Andreas Stihl AG & Co. KG, 71336 Waiblingen (DE)
(72) Erfinder: Vorsmann, David, 58802 Balve (DE); Dopatka, Max, 73271 Holzmaden (DE)
(74) Vertreter: Stock, Johannes

(57) **Zusammenfassung**

Die Erfindung betrifft ein elektrisches Arbeitsgerät umfassend ein Gehäuse (2) und einen im Gehäuse (2) angeordneten Antriebsmotor (3), wobei der Antriebsmotor (3) als Elektromotor ausgebildet ist und zum Antrieb eines Werkzeuges (5) des Arbeitsgerätes (1) vorgesehen ist, einen im Gehäuse (2) ausgebildeten Kühlluftkanal (10) zur Führung eines Kühlluftstromes (11) zum Kühlen des Antriebsmotors (3), wobei der Kühlluftkanal (10) einen gekrümmten Kanalabschnitt (12) aufweist, eine im Kühlluftkanal (10) angeordnete Magnetabscheidervorrichtung (20) zur Abscheidung ferromagnetischer Partikel aus dem Kühlluftstrom (11), wobei die Magnetabscheidervorrichtung (20) bezogen auf den Kühlluftstrom (11) stromaufwärts des Antriebsmotors (3) in dem gekrümmten Kanalabschnitt (12) des Kühlluftkanals (10) angeordnet ist.

## Beschreibung

Die Erfindung betrifft ein elektrisches Arbeitsgerät gemäß den Merkmalen des Oberbegriffs des Anspruchs 1.

Es sind elektrische Arbeitsgeräte bekannt, die ein Gehäuse und einen im Gehäuse angeordneten Antriebsmotor umfassen. Der Antriebsmotor ist als Elektromotor ausgebildet. Über den Antriebsmotor wird ein Werkzeug des Arbeitsgerätes angetrieben. Zur Kühlung des Antriebsmotors umfasst ein derartiges Arbeitsgerät üblicherweise einen Kühlluftkanal. Entlang des Kühlluftkanals strömt ein Kühlluftstrom, der durch den Antriebsmotor strömt, um diesen zu kühlen.

Oftmals werden mit dem Kühlluftstrom unerwünschte Schmutzpartikel in das Gehäuse befördert, darunter auch ferromagnetische Partikel. Bekannte Arbeitsgeräte sehen Magnetabscheidervorrichtungen vor, die an dem Elektromotor haftende, ferromagnetische Partikel anziehen sollen, um den Elektromotor von diesen zu befreien.

Der Einsatz der Magnetabscheidervorrichtungen in bekannten Arbeitsgeräten führt jedoch selten zur vollständigen Befreiung des Elektromotors von ferromagnetischen Partikeln.

Es ist daher Aufgabe der Erfindung, ein elektrisches Arbeitsgerät anzugeben, dass einen effizienten Schutz gegenüber einer Verschmutzung des Elektromotors mit ferromagnetischen Partikeln vorsieht.

Diese Aufgabe wird durch ein elektrisches Arbeitsgerät mit den Merkmalen des Anspruchs 1 angegeben.

Das erfindungsgemäße elektrische Arbeitsgerät umfasst
- ein Gehäuse und einen im Gehäuse angeordneten Antriebsmotor,
   wobei der Antriebsmotor als Elektromotor ausgebildet ist und zum Antrieb eines Werkzeuges des Arbeitsgerätes vorgesehen ist,
- einen im Gehäuse ausgebildeten Kühlluftkanal zur Führung eines Kühlluftstromes zum Kühlen des Antriebsmotors,
   wobei der Kühlluftkanal einen gekrümmten Kanalabschnitt aufweist,
- eine im Kühlluftkanal angeordnete Magnetabscheidervorrichtung zur Abscheidung ferromagnetischer Partikel aus dem Kühlluftstrom.

Ferner ist die Magnetabscheidervorrichtung bezogen auf den Kühlluftstrom stromaufwärts des Antriebsmotors in dem gekrümmten Kanalabschnitt des Kühlluftkanals angeordnet.

Durch die Anordnung der Magnetabscheidervorrichtung stromaufwärts des Antriebsmotors werden die ferromagnetischen Partikel aus dem Kühlluftstrom abgeschieden, noch bevor diese den Antriebsmotor erreichen können. Im gekrümmten Kanalabschnitt folgen die ferromagnetischen Partikel nicht mehr dem Hauptluftstrom, sondern werden aufgrund ihres vergleichsweise hohen Eigengewichtes durch die wirkenden Zentrifugalkräfte aus dem Hauptstrom heraus in den äußeren Bereich des Kanalabschnittes beschleunigt. Beim Austreten der ferromagnetischen Partikel aus dem Hauptstrom werden diese entschleunigt und anschließend durch die Magnetabscheidervorrichtung angezogen und an dieser festgesetzt. Durch die Anordnung der Magnetabscheidervorrichtung in dem gekrümmten Kanalabschnitt ist eine sehr wirksame Reinigung des Kühlluftstromes von den ferromagnetischen Partikeln möglich.

Der Begriff "stromaufwärts" ist in anderen Worten als "entgegen der Strömungsrichtung" zu verstehen. Der Begriff "stromabwärts" ist in anderen Worten als "in Strömungsrichtung" zu verstehen.

Es ist vorteilhaft vorgesehen, dass der Kühlluftstrom im gekrümmten Kanalabschnitt eine Hauptströmung aufweist, und die Hauptströmung im Wesentlichen senkrecht zu einer ersten Strömungsebene und senkrecht zu einer zweiten Strömungsebene verläuft, wobei die erste Strömungsebene und die zweite Strömungsebene einen Winkel einschließen, wobei der Winkel mindestens 10°, vorzugsweise mindestens 30°, besonders bevorzugt mindestens 60°, insbesondere mindestens 80° beträgt. Mit zunehmendem Winkel zwischen der ersten Strömungsebene und der zweiten Strömungsebene wird zumindest mittelbar auch der Radius der Kurve, durch die die Hauptströmung entlang des gekrümmten Kanalabschnittes strömt, kleiner. Mit zunehmendem Winkel erhöht sich also auch die Zentrifugalkraft, wodurch die ferromagnetischen Partikel noch effizienter aus dem Kühlluftstrom abgeschieden werden können.

Es ist besonders vorteilhaft vorgesehen, dass sich die Magnetabscheidervorrichtung zwischen den beiden Strömungsebenen über einen Winkel β erstreckt, der mindestens 10°, insbesondere mindestens 30°, besonders bevorzugt mindestens 50° beträgt. Je größer der Bereich des gekrümmten Kanalabschnittes ist, der von der Magnetabscheidervorrichtung abgedeckt wird, desto effizienter werden die ferromagnetischen Partikel durch die Magnetabscheidervorrichtung aufgenommen.

Es ist besonders vorteilhaft vorgesehen, dass die Magnetabscheidervorrichtung in Richtung der Hauptströmung in der ersten Strömungsebene in Überdeckung mit der Hauptströmung liegt. Somit strömt die Hauptströmung zu Beginn des gekrümmten Kanalabschnittes vorzugsweise in Richtung zur Magnetabscheidervorrichtung. Sobald der Hauptstrom des Kühlluftstromes entlang der Krümmung im gekrümmten Kanalabschnitt strömt, werden die ferromagnetischen Partikel durch die Zentrifugalkraft direkt auf die Magnetabscheidervorrichtung geschleudert. Vorteilhaft liegt die Magnetabscheidervorrichtung entgegen der Richtung der Hauptströmung in der zweiten Strömungsebene in Überdeckung mit der Hauptströmung. Demnach strömt der Hauptstrom von der Magnetabscheidervorrichtung weg, nachdem die ferromagnetischen Partikel durch die Zentrifugalkraft auf die Magnetabscheidervorrichtung geschleudert wurden.

Es ist bevorzugt vorgesehen, dass der gekrümmte Kanalabschnitt in seinem Kanalinnenraum im Bereich der Krümmung eine Innenseite und eine Außenseite aufweist, wobei der Abstand zwischen der Magnetabscheidervorrichtung und der Außenseite geringer ist als der Abstand zwischen der Magnetabscheidervorrichtung und der Innenseite. Durch die Anordnung der Magnetabscheidervorrichtung nahe der Außenseite des gekrümmten Kanalabschnittes, kann der Luftstrom zwischen der Kanalinnenseite des gekrümmten Kanalabschnittes und der Magnetabscheidervorrichtung strömen, wobei die ferromagnetischen Teile unmittelbar auf die Magnetabscheidervorrichtung geschleudert werden. Besonders bevorzugt erstreckt sich die Magnetabscheidervorrichtung entlang einer Längsachse und ist bezogen auf ihre Längsachse in etwa tangential zur Hauptströmung angeordnet. Somit wird der Hauptstrom durch die Magnetabscheidervorrichtung nicht blockiert, demnach die Magnetabscheidervorrichtung keinen wesentlichen Widerstand für den Hauptstrom bildet.

Es ist vorteilhaft vorgesehen, dass die Magnetabscheidervorrichtung lösbar am Gehäuse gehalten ist. Somit kann die Magnetabscheidervorrichtung aus dem Gehäuse des Arbeitsgerätes entnommen werden, auf einfache Weise gereinigt werden und anschließend wieder am Gehäuse befestigt werden. Ferner kann auch der gekrümmte Kanalabschnitt im Bereich der Magnetabscheidervorrichtung gereinigt werden. Auch ein einfacher Austausch defekter Teile der Magnetabscheidervorrichtung ist somit möglich.

Besonders bevorzugt umfasst die Magnetabscheidervorrichtung einen Träger und mindestens einen in/an dem Träger gehaltenen Dauermagneten. Vorteilhaft umfasst die Magnetabscheidervorrichtung mehrere Dauermagneten, insbesondere mindestens drei Dauermagneten. Die Dauermagneten sind vorzugsweise in Richtung der Längsachse der Magnetabscheidervorrichtung hintereinander angeordnet. Auch andere Anordnungen der Dauermagneten können zweckmäßig sein. An dieser Stelle sei darauf hingewiesen, dass Größe und Anzahl der Dauermagneten vor allem in Abhängigkeit der Größe des Kühlluftkanals und der Größe des Volumenstroms der Kühlluft auszulegen sind.

Es ist besonders vorteilhaft vorgesehen, dass der gekrümmte Kanalabschnitt eine erste Längsseite und eine der ersten Längsseite gegenüberliegende zweite Längsseite aufweist, wobei die Magnetabscheidervorrichtung derart im gekrümmten Kanalabschnitt angeordnet ist, dass die Magnetabscheidervorrichtung im Bereich des mindestens einen Dauermagneten sowohl an einer der ersten Längsseite des Kanalabschnittes zugewandten ersten Seite der Magnetabscheidervorrichtung als auch an einer der zweiten Längsseite des Kanalabschnittes zugewandten zweiten Seite der Magnetabscheidervorrichtung umströmt werden kann. Demnach sind die Seitenflächen der Magnetabscheidervorrichtung beabstandet zur ersten Längsseite und zur zweiten Längsseite des gekrümmten Kanalabschnittes angeordnet. Dies führt zu einem noch geringeren Strömungswiderstand des Kühlluftstromes. Zudem können in diesem Bereich die ferromagnetischen Partikel an der Magnetabscheidervorrichtung gesammelt werden.

Besonders bevorzugt umfasst das Gehäuse ein Lüftungsgitter mit mindestens einer Einlassöffnung für den Kühlluftstrom, wobei die Einlassöffnung Teil des Kühlluftkanals ist und in den gekrümmten Kanalabschnitt mündet. Die Einlassöffnung bildet eine Entwässerungsöffnung des Kühlluftkanals. Die Entwässerungsöffnung ist derart ausgebildet, dass sämtliche Flüssigkeit im Bereich der Einlassöffnung über das Lüftungsgitter in die Umgebung abfließen kann.

Bevorzugt ist im Kühlluftkanal im Bereich der Einlassöffnung ein Reservoir zum Auffangen von Schmutzpartikeln, insbesondere von mineralischen Schmutzpartikeln vorgesehen.

Vorteilhafte Ausgestaltungen können sich durch beliebige Kombinationen der Elemente des Ausführungsbeispiels ergeben. Ein Ausführungsbeispiel der Erfindung wird im Folgenden anhand der Zeichnung erläutert. Es zeigen:
- Fig. 1: in einer Seitenansicht eine erfindungsgemäße Ausführung des elektrischen Arbeitsgerätes,
- Fig. 2: in einer Ansicht von unten das Arbeitsgerät nach Fig. 1,
- Fig. 3: in Seitenansicht das Arbeitsgerät nach Fig. 1 ohne Ausleger,
- Fig. 4: in einer ausschnittsweisen, perspektivischen Schnittdarstellung gemäß der Schnittlinie zwischen den Pfeilen IV in Fig. 3 das Arbeitsgerät nach Fig. 1,
- Fig. 5: in einer Ansicht von vorne das Arbeitsgerät nach Fig. 1 ohne Ausleger,
- Fig. 6: in einer ausschnittsweisen, perspektivischen Schnittdarstellung gemäß der Schnittlinie zwischen den Pfeilen VI in Fig. 5 das Arbeitsgerät nach Fig. 1,
- Fig. 7: in einer ausschnittsweisen Seitendarstellung der Kühlluftkanal im Bereich des gekrümmten Kanalabschnittes mit Magnetabscheidervorrichtung des Arbeitsgerätes nach Fig. 1
- Fig. 8: in einer ausschnittsweisen Schnittdarstellung die Magnetabscheidervorrichtung des Arbeitsgerätes nach Fig. 1,
- Fig. 9: in einer perspektivischen Explosionsdarstellung die Magnetabscheidervorrichtung des Arbeitsgerätes nach Fig. 1,
- Fig. 10: in einer perspektivischen Darstellung das Spiralgehäuse des Arbeitsgerätes nach Fig. 1,
- Fig. 11: in einer ausschnittsweisen Seitendarstellung der Kühlluftkanal im Bereich des gekrümmten Kanalabschnittes mit Magnetabscheidervorrichtung eines weiteren ebenfalls erfindungsgemäßen Ausführungsbeispiels eines Arbeitsgerätes,
- Fig. 12: in einer ausschnittsweisen Schnittdarstellung eine Magnetabscheidervorrichtung für ein Arbeitsgerät nach Fig. 11,
- Fig. 13: in einer perspektivischen Darstellung eine alternative Ausführung der Magnetabscheidervorrichtung,
- Fig. 14: in einer perspektivischen Explosionsdarstellung die Magnetabscheidervorrichtung gemäß Fig. 13,
- Fig. 15: in einer Schnittdarstellung die Magnetabscheidervorrichtung nach Fig. 13,
- Fig. 16: in einer Schnittdarstellung des Ausschnittes A nach Fig. 15 das obere Ende des Fixierelementes der Magnetabscheidervorrichtung nach Fig. 13 und
- Fig. 17: in einer Schnittdarstellung des Ausschnittes B nach Fig. 15 das untere Ende des Fixierelementes der Magnetabscheidervorrichtung nach Fig. 13.

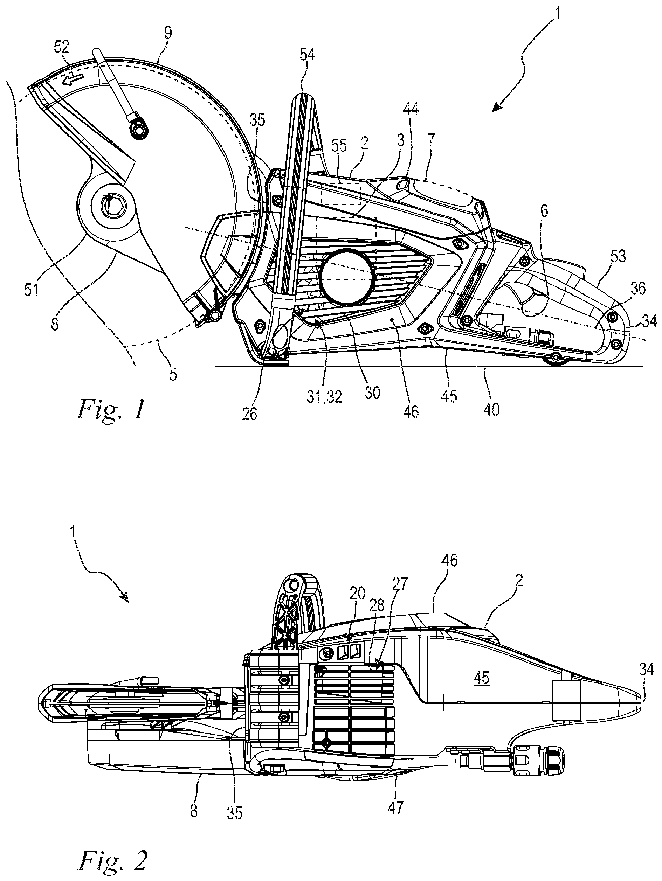

Fig. 1 zeigt als Ausführungsbeispiel für ein erfindungsgemäßes elektrisches Arbeitsgerät 1 einen Trennschleifer. Auch eine alternative Ausgestaltung des Arbeitsgerätes 1, beispielsweise als Motorkettensäge, ist möglich. Das Arbeitsgerät 1 ist ein handgeführtes, handgetragenes Arbeitsgerät 1. Das Arbeitsgerät 1 wird im Betrieb vom Bediener getragen und geführt. Das Arbeitsgerät 1 weist ein Gehäuse 2 auf, an dem zum Führen des Arbeitsgeräts 1 im Betrieb ein Handgriff 53 sowie ein Griffrohr 54 angeordnet sind. Auch andere Handgriffe können vorgesehen sein. Im Gehäuse 2 ist ein Antriebsmotor 3 angeordnet. Der Antriebsmotor 3 ist lediglich schematisch durch ein strichliertes Rechteck dargestellt. Am hinteren Handgriff 3 ist ein Bedienelement 6 zur Ansteuerung des Antriebsmotors 3 vorgesehen. Im Ausführungsbeispiel ist der Antriebsmotor 3 ein Elektromotor. Der Elektromotor wird von einem im Gehäuse 2 gehaltenen Akku 7 mit Energie versorgt ist. Das Arbeitsgerät 1 umfasst einen Ausleger 8, der an seinem einen Ende am Gehäuse 2 festgelegt ist. Der Ausleger 8 weist ein freies Ende 51 auf, das vom Gehäuse 2 weg ragt. Am freien Ende 51 des Auslegers 8 ist ein Werkzeug 5 drehbar gelagert. Das Werkzeug 5 ist lediglich schematisch angedeutet. Das Werkzeug 5 ist im Ausführungsbeispiel eine Trennscheibe. Im Betrieb des Arbeitsgerätes 1 ist das Werkzeug 5 vom Antriebsmotor 3 in einer Drehrichtung 52 rotierend angetrieben. Am Ausleger 8 ist eine Schutzhaube 10 festgelegt. Die Schutzhaube 10 deckt das Werkzeug 5 über einen Teil seines Umfangs ab.

Wie in den Figuren 1 und 2 gezeigt, erstreckt sich das Gehäuse 2 entlang einer Längsmittelachse 36 von einem hinteren Ende 34 bis zu einem vorderen Ende 35. Das hintere Ende 34 des Gehäuses 2 ist an dem Handgriff 53 ausgebildet. Über das vordere Ende 35 des Gehäuses 2 hinaus erstreckt sich der Ausleger 8 mit dem an dem Ausleger 8 angeordneten Werkzeug 5. Ferner umfasst das Gehäuse 2 eine Oberseite 44 und eine Unterseite 45, wobei das Arbeitsgerät 1 auf der Unterseite 45 auf den Boden 40 abstellbar ist. Die Oberseite 44 und die Unterseite 45 sind durch eine erste Längsseite 46 und eine zweite Längsseite 47 miteinander verbunden.

Im bevorzugten Ausführungsbeispiel umfasst das Arbeitsgerät 1 eine im Gehäuse 2 angeordnete Steuereinheit 55. Die Steuereinheit 55 ist in Fig. 1 schematisch durch ein strichliertes Rechteck dargestellt. Die Steuereinheit 55 verarbeitet Signale, die durch Bedienelemente 6 erzeugt werden und dient im Wesentlichen zur Steuerung des Antriebsmotors 3.

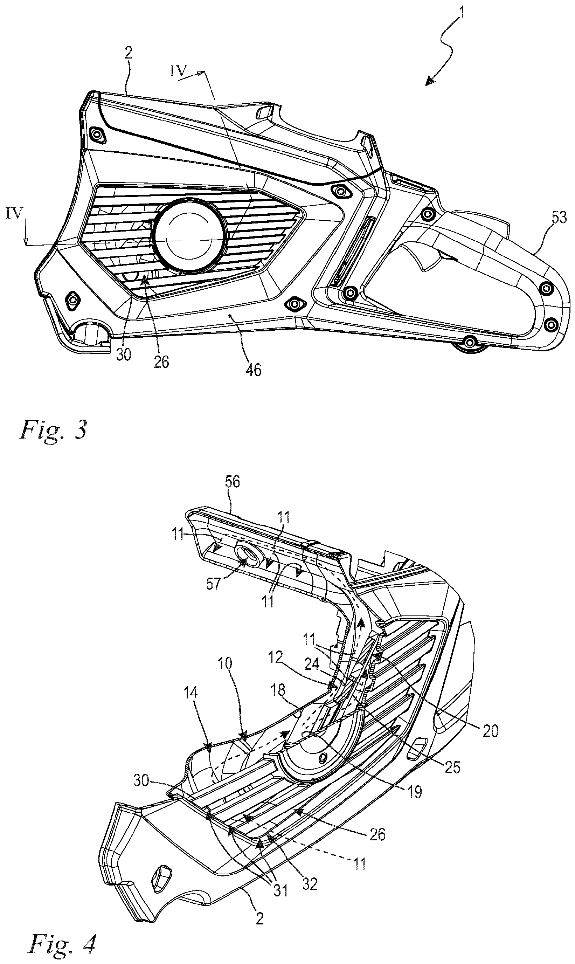

Das Arbeitsgerät 1 umfasst mindestens einen Kühlluftkanal 10 zur Führung eines Kühlluftstromes 11 (Fig. 4). Mittels des Kühlluftstromes 11 wird der als Elektromotor ausgebildete Antriebsmotor 3 im Betrieb des Arbeitsgerätes 1 gekühlt. Ferner sollen weitere Bauteile, insbesondere elektronische Bauteile, des Arbeitsgerätes 1 gekühlt werden. Solche elektronischen Bauteile sind beispielsweise die Steuereinheit 55.

Wie in den Figuren 1 und 2 gezeigt, ist im Gehäuse 2 ein Kanaleinlass 26 und ein Kanalauslass 27 vorgesehen. Der Kühlluftstrom 11 strömt über den Kanaleinlass 26 in den Kühlluftkanal 10 ein. Anschließend strömt der Kühlluftstrom 11 durch den Kühlluftkanal 10 hindurch und kühlt dabei die Steuereinheit 55 sowie den Antriebsmotor 3. Zuletzt strömt der Kühlluftstrom 11 über den Kanalauslass 27 aus dem Kühlluftkanal 10 in die Umgebung aus. Der Kanaleinlass 26 ist im Ausführungsbeispiel an der ersten Längsseite 46 des Gehäuses 2 angeordnet. Der Kanaleinlass 26 ist durch ein erstes Lüftungsgitter 30 des Gehäuses 2 ausgebildet. Wie in Fig. 2 gezeigt, ist im bevorzugten Ausführungsbeispiel der Kanalauslass 27 an der Unterseite 45 des Gehäuses 2 ausgebildet. Der Kanalauslass 27 ist durch ein zweites Lüftungsgitter 28 des Gehäuses 2 ausgebildet.

In den Figuren 4 bis 6 ist der Verlauf des Kühlluftstromes 11 näher dargestellt. Die Fig. 3 zeigt in einer Seitenansicht ausschnittsweise das erfindungsgemäße Arbeitsgerät 1. Fig. 4 zeigt ein perspektivisches Schnittbild gemäß der Schnittlinie zwischen den Pfeilen IV in Fig. 3. In Fig. 4 ist die erste Längsseite 46 des Gehäuses 2 dargestellt. An der ersten Längsseite 46 ist der Kanaleinlass 26 durch das erste Lüftungsgitter 30 ausgebildet. Der Kühlluftstrom 11 strömt über den Kanaleinlass 26 von der Außenumgebung in den Kühlluftkanal 10 ein. Von dort strömt der Kühlluftstrom 11 in Richtung des hinteren Endes 34 des Gehäuses 2 in einen gekrümmten Kanalabschnitt 12. Der gekrümmte Kanalabschnitt 12 führt den Kühlluftstrom 11 in Richtung zur Oberseite 44 des Gehäuses 2. Anschließend verläuft der Kühlluftkanal 10 in Richtung zur zweiten Längsseite 47 entlang eines Querabschnittes 56. Der Querabschnitt 56 ist Teil des Gehäuses 2. Im Querabschnitt 56 ist eine Öffnung 57 für einen Schraubdom vorgesehen.

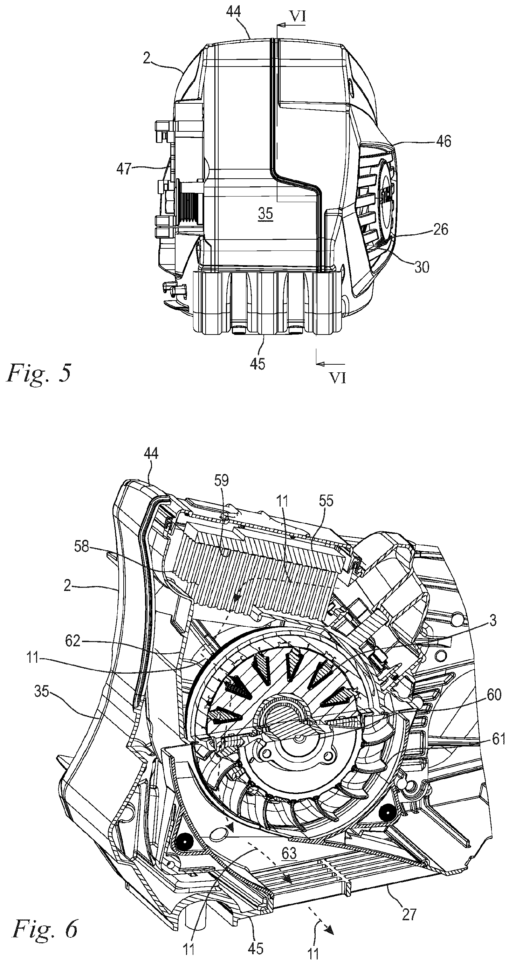

In Fig. 5 ist die Vorderansicht des Gehäuses 2 des Arbeitsgerätes 1 gezeigt. In Fig. 6 ist eine ausschnittsweise, perspektivische Schnittdarstellung des Arbeitsgerätes 1 entlang der Schnittlinie zwischen den Pfeilen VI in Fig. 5 gezeigt. Die Steuereinheit 55 ist am Gehäuse 2 befestigt. An der Steuereinheit 55, insbesondere an einer Unterseite 59 der Steuereinheit 55 ist ein Kühlkörper 58 angeordnet. Der Kühlkörper 58 ist aus einer Vielzahl einzelner Stäbchen gebildet, die zueinander beabstandet angeordnet sind. Der Kühlluftstrom 11 umströmt die Steuereinheit 55. Ferner durchströmt der Kühlluftstrom den Kühlkörper 58, wodurch die Wärme aus der Steuereinheit 55 abgeführt wird. Zudem umströmt der Kühlluftstrom 11 weitere nicht näher dargestellte Elektronik des Arbeitsgerätes, zum Beispiel die Phasenanschlüsse des Elektromotors etc. Der Kühlluftkanal 10 verläuft weiter in ein Spiralgehäuse 62. Demnach strömt der Kühlluftstrom 11 von der Steuereinheit 55 in das Spiralgehäuse 62.

Wie in Fig. 6 gezeigt, ist in dem Spiralgehäuse 62 der Antriebsmotor 3, insbesondere Elektromotor, angeordnet. Der Antriebsmotor 3 weist eine Antriebswelle 60 auf. Auf der Antriebswelle 60 ist ein Lüfterrad 61 befestigt, dass durch den Antriebsmotor 3 drehend angetrieben ist. Das Lüfterrad 61 erzeugt im Betrieb des Arbeitsgerätes 1 einen Unterdruck im Spiralgehäuse 62, wodurch der Kühlluftstrom 11 erzeugt wird. Der Kühlluftstrom 11 umströmt im Spiralgehäuse 62 den Antriebsmotor 3 bis hin zum Lüfterrad 61. Durch das Lüfterrad 61 wird der Kühlluftstrom 11 über einen Diffusor 63 durch den Kanalauslass 27 in die Außenumgebung geleitet.

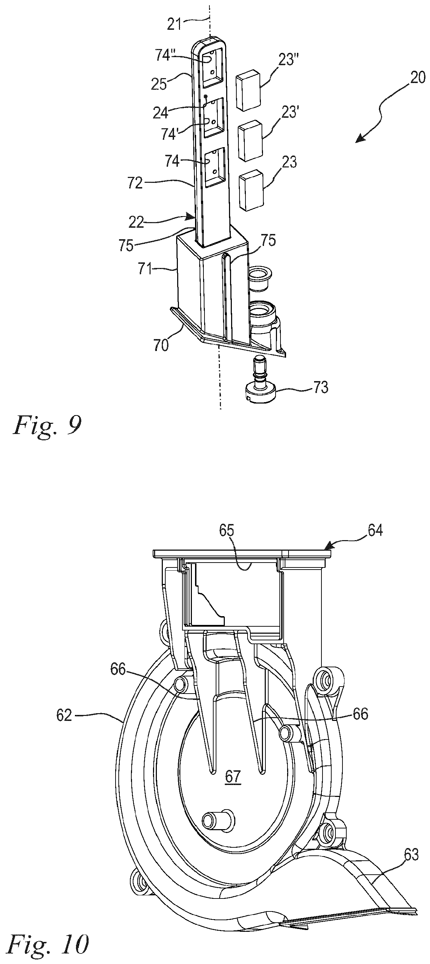

In Fig. 10 ist eine perspektivische Ansicht des Spiralgehäuses 62 gezeigt. Eine Besonderheit des Spiralgehäuses 62 besteht darin, dass das Spiralgehäuse 62 eine Abstützvorrichtung 64 zur Aufnahme der Steuereinheit 55 umfasst. Auch andere Elektronikbauteile des Arbeitsgerätes 1 können an der Abstützvorrichtung 64 befestigt oder abgestützt werden. Die Abstützvorrichtung 64 ist aus einem rechteckförmigen Rahmen gebildet. In dem Rahmen ist die Steuereinrichtung 55 sowie der Kühlkörper 58 aufgenommen (Fig. 6). Für eine ausreichende Steifigkeit der Abstützvorrichtung 64 sind an dieser mehrere Versteifungsrippen 66 angeformt, die bevorzugt bis in das Zentrum der Spirale 67 ragen. Das Spiralgehäuse 62 ist einteilig ausgebildet. Das Spiralgehäuse 62 ist vorzugsweise ein Spritzgussteil. Durch die Integration der Abstützvorrichtung 64 in das Spiralgehäuse 62 können Anzahl der Bauteile sowie damit verbundene Kosten reduziert werden. Zudem ist die Montage des Arbeitsgerätes 1 vereinfacht.

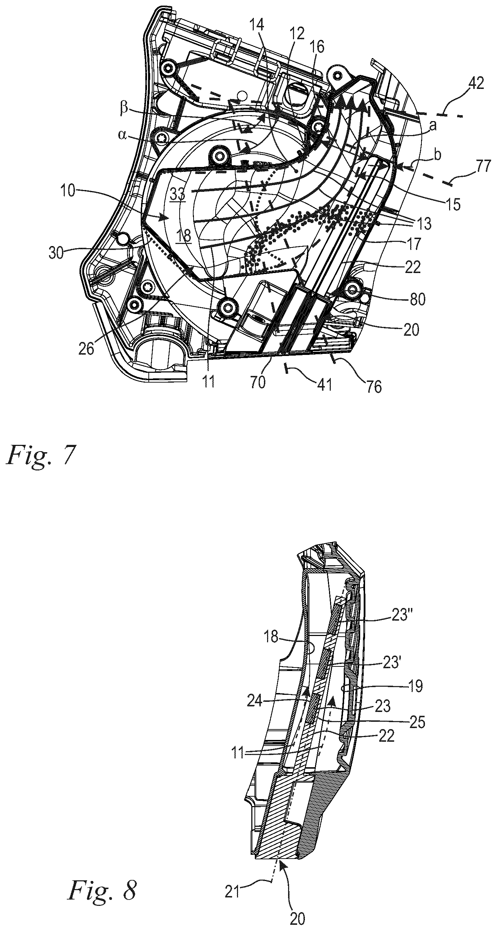

In Fig. 7 ist ein Ausschnitt des Kühlluftkanals 10 gezeigt. Das erste Lüftungsgitter 30 ist strichliert dargestellt. Demnach strömt der Kühlluftstrom 11 in Blickrichtung der Fig. 7 durch den Kanaleinlass 26. Unmittelbar nach dem Einströmen durch das erste Lüftungsgitter 30 ändert der Kühlluftstrom 11 seine Richtung zum hinteren Ende 34 des Gehäuses 2. Durch die Änderung der Strömungsrichtung des Kühlluftstromes 11 werden Schmutzpartikel, insbesondere auch mineralische Schmutzpartikel gegen eine erste Längsseite 18 des Kühlluftkanals 10 geschleudert. Um den Kanaleinlass 26 frei von Schmutz zu halten, ist an der Längsseite 18 des Kühlluftkanals 10 im Bereich des Kanaleinlasses 26 ein Reservoir 33 zur Aufnahme von Schmutzpartikeln ausgebildet. Das Reservoir 33 erstreckt sich in Richtung von der ersten Längsseite 46 zur zweiten Längsseite 47. Mit anderen Worten stellt das Reservoir 33 eine Einbuchtung in der Längsseite 18 dar.

Wie in Fig. 7 gezeigt, ist in dem gekrümmten Kanalabschnitt 12 des Kühlluftkanals 10 eine Magnetabscheidervorrichtung 20 angeordnet. Die Magnetabscheidervorrichtung 20 ist somit stromaufwärts des Antriebsmotors 3 angeordnet. Die Magnetabscheidervorrichtung 20 dient zur Abscheidung ferromagnetischer Partikel aus dem Kühlluftstrom 11.

Wie in Fig. 9 gezeigt, umfasst die Magnetabscheidervorrichtung 20 mindestens einen Dauermagneten 23, 23', 23". In der bevorzugten Ausführungsform umfasst die Magnetabscheidervorrichtung 20 mehrere, insbesondere drei Dauermagneten 23, 23', 23". Es kann zweckmäßig sein, eine andere Anzahl sowie eine andere Größe der Dauermagneten 23, 23', 23" vorzusehen, insbesondere bei einer erfindungsgemäßen Ausführung des Arbeitsgerätes 1, welches einen Kühlluftstrom 11 mit deutlich anderem Volumenstrom aufweist. Die Magnetabscheidervorrichtung 20 umfasst einen Träger 22. Am Träger 22 ist der mindestens eine Dauermagnet 23, 23', 23", insbesondere die mehreren, vorzugsweise die drei Dauermagneten 23, 23', 23" gehalten. Der Träger 22 weist einen Boden 70 auf. Am Boden 70 des Trägers 22 ist ein Sockel 71 ausgebildet. Der Sockel 71 dient zur Anlage am Gehäuse 2 des Arbeitsgerätes 1. An dem dem Boden 70 abgewandten Ende des Sockels 71 ist ein schwertförmiger Fortsatz 72 angeordnet. An dem Fortsatz 72 sind die Dauermagneten 23, 23', 23" gehalten. Die Magnetabscheidervorrichtung 20 weist eine Längsmittelachse 21 auf. Der Boden 70, der Sockel 71 und der Fortsatz 72 sind entlang der Längsmittelachse 21 hintereinander angeordnet. Der Querschnitt des Fortsatzes 72 ist geringer als der Querschnitt des Sockels 71. Die Dauermagneten 23, 23', 23" sind in Richtung der Längsmittelachse 21 der Magnetabscheidervorrichtung 20 hintereinander angeordnet.

Wie in Fig. 9 gezeigt, weist der Fortsatz 72 Öffnungen 74, 74', 74" auf. In einer jeden Öffnung 74, 74', 74" ist ein Dauermagnet 23, 23', 23" gehalten. Die Öffnungen 74, 74`, 74" sind im vorliegenden Ausführungsbeispiel nicht als Durchgangsöffnungen ausgebildet. Demnach sind die Öffnungen 74, 74', 74" auf der ersten Seite 24 des Fortsatzes 72 ausgebildet. Die zweite Seite 25 des Fortsatzes 72 ist geschlossen. Die Dauermagneten 23, 23', 23" sind im bevorzugten Ausführungsbeispiel geklebt an dem Träger 22, insbesondere in den Öffnungen 74, 74', 74" des Fortsatzes 72 gehalten. Die Dauermagneten 23, 23', 23" sind an einer Polseite geklebt. In einer alternativen Ausführung kann es auch vorgesehen sein, dass die Dauermagneten 23, 23', 23" eingepresst sind. Vorteilhaft können die Dauermagneten 23, 23', 23" geklebt und eingepresst sein. Auch andere Befestigungsarten der Dauermagneten 23, 23', 23" an dem Träger 22 sind möglich. Eine Anlagerung von ferromagnetischen Partikeln ist im Bereich beider Polseiten der Dauermagneten 23, 23', 23" möglich. In einer alternativen, ebenfalls erfindungsgemäßen Ausführung können die Öffnungen 74, 74', 74" als Durchgangsöffnungen ausgebildet sein, so dass beide Polseiten der Dauermagneten 23, 23', 23" direkten Kontakt zum Kühlluftstrom 11 haben.

Wie in Fig. 9 gezeigt, ist die Magnetabscheidervorrichtung 20 lösbar am Gehäuse 2 gehalten. Die Magnetabscheidervorrichtung 20 weist ein Befestigungsmittel 73 auf, über welches die Magnetabscheidervorrichtung 20 am Gehäuse 2 befestigt ist. Das Befestigungsmittel 73 ist im bevorzugten Ausführungsbeispiel als Schraube ausgebildet. Wie auch in den Figuren 7 und 8 gezeigt, ist die Magnetabscheidervorrichtung 20 mit ihrem Fortsatz 72 voran in das Gehäuse 2 eingeschoben. Über den Sockel 71 ist die Magnetabscheidervorrichtung 20 an dem Gehäuse 2 abgestützt. Ferner weist der Sockel 71 zwei Führungsschienen 75 auf, die an gegenüberliegenden Seiten des Sockels 71 ausgebildet sind. Die Führungsschienen 75 greifen in am Gehäuse 2 ausgebildete Gegenkonturen ein. Somit wird die Montage der Magnetabscheidervorrichtung 20 vereinfacht. Der Fortsatz 72 des Trägers 22 ragt mit den an dem Fortsatz 72 befestigten Dauermagneten 23, 23', 23" in den gekrümmten Kanalabschnitt 12. Der Boden 70 der Magnetabscheidervorrichtung 20 schließt mit der Außenseite des Gehäuses 2 bündig ab.

Wie in Fig. 7 weist der gekrümmte Kanalabschnitt 12 in seinem Kanalinnenraum 14 im Bereich seiner Krümmung 15 eine Innenseite 16 und eine Außenseite 17 auf. Der Radius der Außenseite 17 ist größer als der Radius der Innenseite 16. Die erste Längsseite 18 des gekrümmten Kanalabschnittes 12 sowie eine der ersten Längsseite 18 gegenüberliegende zweite Längsseite 19 des gekrümmten Kanalabschnittes 12 sind durch die Innenseite 16 und die Außenseite 17 miteinander verbunden. Die Magnetabscheidervorrichtung 20 ist benachbart zur Außenseite 17 des gekrümmten Kanalabschnittes 12 angeordnet. Demnach ist ein Abstand b zwischen der Magnetabscheidervorrichtung 20 und der Außenwand 17 des gekrümmten Kanalabschnittes 12 geringer als ein Abstand a zwischen der Magnetabscheidervorrichtung 20 und der Innenwand 16 des gekrümmten Kanalabschnittes 12. Der Abstand b zwischen der Magnetabscheidervorrichtung 20 und der Außenwand 17 beträgt höchstens 50%, vorzugsweise höchstens 30%, bevorzugt höchstens 15% des Abstands a zwischen der Magnetabscheidervorrichtung 20 und der Innenwand 16. Eine mittlere Länge des gekrümmten Kanalabschnittes 12 beträgt vorzugsweise 100 bis 140 mm.

Wie in Fig. 7 gezeigt, weist der Kühlluftstrom 11 im gekrümmten Kanalabschnitt 12 des Kühlluftkanals 10 eine Hauptströmung 13 auf. Die Hauptströmung 13 verläuft entlang des gekrümmten Kanalabschnittes 12. Dabei wirken Zentrifugalkräfte auf Partikel, insbesondere ferromagnetische Partikel, die sich in der Hauptströmung 13 befinden. Durch die auf die Partikel wirkenden Zentrifugalkräfte werden diese nach außen, also zur Außenseite 17 des gekrümmten Abschnittes 12 getragen. Mit zunehmender Krümmung steigen auch die auf die Partikel wirkenden Zentrifugalkräfte.

Wie in Fig. 7 gezeigt, weist die Hauptströmung 13 eine erste Strömungsebene 41 und eine zweite Strömungsebene 42 auf. Die Hauptströmung 13 ist im Wesentlichen senkrecht zu den Strömungsebenen 41, 42 ausgebildet. Die Strömungsebenen 41, 42 schneiden die Hauptströmung 13 an verschiedenen Strömungsabschnitten der Hauptströmung 13. Die erste Strömungsebene 41 und die zweite Strömungsebene 42 schließen einen Winkel α ein. Der Winkel α ist zur Magnetabscheidervorrichtung 20, insbesondere zu mindestens einem Dauermagneten 23, 23', 23", hin geöffnet. Der Winkel α beträgt vorzugsweise mindestens 10°, insbesondere mindestens 30°, besonders bevorzugt mindestens 60°, insbesondere mindestens 80°.

Wie in Fig. 7 gezeigt, ist die Magnetabscheidervorrichtung 20 derart im gekrümmten Kanalabschnitt 12 angeordnet, dass die ferromagnetischen Partikel, die durch die Zentrifugalkraft aus dem Hauptstrom 13 in Richtung zur Außenseite 17 des gekrümmten Kanalabschnittes 12 getragen werden, durch die Dauermagnete 23, 23', 23" aufgefangen werden. Die ferromagnetischen Partikel sind durch die in Fig. 7 gezeigte Punktewolke schematisch dargestellt. Damit möglichst viele ferromagnetische Partikel erfasst werden können, ist es vorteilhaft, wenn sich die Magnetabscheidervorrichtung 20 über einen möglichst großen Abschnitt entlang des gekrümmten Kanalabschnittes 12, insbesondere entlang des Abschnittes mit der größten Krümmung, erstreckt. Hierfür ist es vorgesehen, dass sich die Magnetabscheidervorrichtung 20 zwischen den beiden Strömungsebenen 41, 42 über einen Winkel β erstreckt, der mindestens 10°, vorzugsweise mindestens 30°, besonders bevorzugt mindestens 50° beträgt. Der Winkel β ergibt sich aus einer ersten Tangentialebene 76 und einer zweiten Tangentialebene 77, die sich in der gleichen Geraden, wie die Strömungsebenen 41, 42 schneiden. Die erste Tangentialebene 76 tangiert den Fortsatz 72 der Magnetabscheidervorrichtung 20 an dem dem Sockel 71 zugewandten Ende. Die zweite Tangentialebene 77 tangiert den Fortsatz 72 der Magnetabscheidervorrichtung 20 an dem freien Ende.

Wie in Fig. 7 gezeigt, verläuft die Hauptströmung 13 des Kühlluftstromes 11 zuerst auf die Magnetabscheidervorrichtung 20 zu. Kurz vor Erreichen der Magnetabscheidervorrichtung 20 verläuft die Hauptströmung 13 entlang einer Kurve und strömt von der Magnetabscheidervorrichtung 20 weg. Damit die ferromagnetischen Partikel auch in Richtung der Magnetabscheidervorrichtung 20 geschleudert werden, ist es vorteilhaft, wenn die anfängliche Strömungsrichtung der Hauptströmung, also die Strömungsrichtung der Hauptströmung in der ersten Strömungsebene 41, auf die Magnetabscheidervorrichtung 20 gerichtet ist. Somit liegt die Magnetabscheidervorrichtung 20 mit der Richtung der Hauptströmung 13 an der ersten Strömungsebene 41 in Überdeckung. Demnach schneidet eine gedachte Verlängerungsachse der Hauptströmung 13 an der ersten Strömungsebene 41 die Magnetabscheidervorrichtung 20. Hat die Hauptströmung 13 die Magnetabscheidervorrichtung 20 passiert, verläuft die Hauptströmung 13 von der Magnetabscheidervorrichtung 20 weg. Demnach liegt die Magnetabscheidervorrichtung 20 bevorzugt entgegen der Richtung der Hauptströmung 13 in der zweiten Strömungsebene 42 in Überdeckung mit der Hauptströmung 13. Eine gedachte Verlängerungsachse an der Hauptströmung 13 in der zweiten Strömungsebene 42 schneidet ebenfalls die Magnetabscheidervorrichtung 20. Die erste Strömungsebene 41 liegt stromaufwärts der zweiten Strömungsebene 42.

Wie in Fig. 7 gezeigt, ist die Magnetabscheidervorrichtung 20 derart in dem gekrümmten Kanalabschnitt 12 angeordnet, dass die Längsmittelachse 21 der Magnetabscheidervorrichtung 20 in etwa tangential zur Hauptströmung 13 ausgerichtet ist.

Wie in Fig. 8 gezeigt, ist die Magnetabscheidervorrichtung 20 derart im gekrümmten Kanalabschnitt 12 angeordnet, dass die Magnetabscheidervorrichtung 20 an ihren Längsseiten 24, 25 im Bereich der Dauermagnete 23, 23', 23" umströmt werden kann. Demnach sind die Dauermagnete 23, 23', 23" zu den Längsseiten 18, 19 des gekrümmten Kanalabschnittes 12 beabstandet angeordnet. Die Magnetabscheidervorrichtung 20 ist derart in dem gekrümmten Kanalabschnitt angeordnet, dass die erste Längsseite 24 der Magnetabscheidervorrichtung 20 der ersten Längsseite 18 des gekrümmten Kanalabschnittes 12 zugewandt ist. Ferner ist die zweite Längsseite 25 der Magnetabscheidervorrichtung 20 der zweiten Längsseite 19 des gekrümmten Kanalabschnittes 12 zugewandt.

Wie insbesondere in Fig. 7 gezeigt, ist im gekrümmten Kanalabschnitt 12 im Bereich der Magnetabscheidervorrichtung 20 ein Sammelbereich 80 zur Aufnahme von Partikeln, insbesondere ferromagnetischen Partikeln vorgesehen. Der Sammelbereich 80 ist unterhalb der Hauptströmung 13 angeordnet. Der Sammelbereich 80 schließt an dem Sockel 71 der Magnetabscheidervorrichtung 20 an. Wird die Magnetabscheidervorrichtung 20 beispielsweise zur Reinigung demontiert, fallen sämtliche im Sammelbereich 80 befindlichen Partikel aus dem Kühlluftkanal 10 in die Umgebung.

Wie insbesondere in Fig. 4 gezeigt, weist das Lüftungsgitter 30 mindestens eine Einlassöffnung 31 auf. Die Einlassöffnungen 31 bilden gemeinsam den Kanaleinlass 26, über welchen der Kühlluftstrom 11 in den Kanalinnenraum 14 strömt. Die Einlassöffnungen 31 sind die Öffnungen, die zwischen den einzelnen Rippen des Lüftungsgitters 30 vorgesehen sind. Werden Arbeitsgeräte in feuchten Umgebungen eingesetzt, kann Spritzwasser über das Lüftungsgitter 30 in den Kühlluftkanal 10 eintreten. Dies kann beispielsweise auch dann der Fall sein, wenn das Arbeitsgerät 1 zur Reinigung mit Wasser abgespritzt wird. In der bevorzugten Ausführung des Arbeitsgerätes 1 ist es nun vorgesehen, dass an dem Lüftungsgitter 30 eine Entwässerungsöffnung 32 vorgesehen ist. Die Entwässerungsöffnung 32 ist derart ausgebildet, dass in den Kühlluftkanal 10 eingetretenes Wasser aus der Entwässerungsöffnung 32 in die Umgebung ablaufen kann. Die Entwässerungsöffnung 32 ist durch die unterste Einlassöffnung 31 des Lüftungsgitters 30 gebildet. Die Entwässerungsöffnung 32 ist derart ausgebildet, dass in einem auf einen horizontal verlaufenden Boden 40 abgestellten Zustand des Arbeitsgerätes 1 (Fig. 1), in dem Kühlluftkanal 10 enthaltene Flüssigkeit im Bereich des Kanaleinlasses 26 vollständig ablaufen kann. Hierfür ist die Entwässerungsöffnung 32 mindestens so tief angeordnet, wie der Boden des Kanalinnenraums 14 im Bereich des Kanaleinlasses 26. Vorzugsweise weist die Entwässerungsöffnung 32 eine zur Umgebung hin ausgerichtete Ablaufschräge auf, damit Flüssigkeiten noch besser aus dem Kanalinnenraum 14 in die Umgebung ablaufen können.

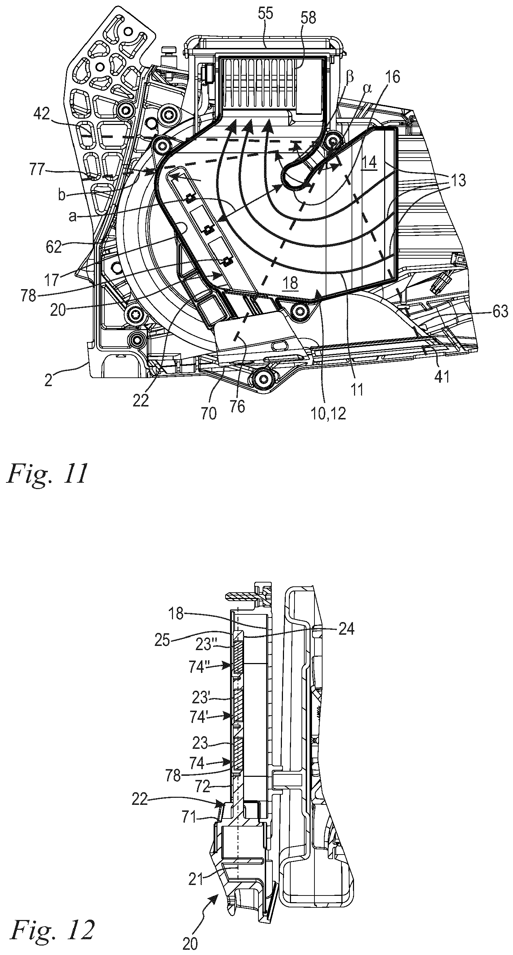

In den Figuren 11 und 12 ist der gekrümmte Kanalabschnitt 12 mit Magnetabscheidervorrichtung 20 einer weiteren, erfindungsgemäßen Ausführung des Arbeitsgerätes gezeigt. Gleiche Bezugszeichen bezeichnen gleiche Bauteile. Nachfolgend lediglich die Unterschiede der Ausführung des Arbeitsgerätes nach den Figuren 11 und 12 gegenüber der Ausführung nach den Figuren 1 bis 10 beschrieben.

Wie in Fig. 11 gezeigt, ist der Winkel α zwischen den beiden Strömungsebenen 41, 42 deutlich größer ausgebildet, insbesondere über 90°. Die Magnetabscheidervorrichtung 20 liegt ebenfalls stromaufwärts des Elektromotors. Allerdings führt der Kühlluftstrom 11 unmittelbar nach dem gekrümmten Kanalabschnitt 12 zum Kühlkörper 58 an der Steuereinheit 55. Wie in Fig. 12 gezeigt, sind die Öffnungen 74, 74', 74" der Magnetabscheidervorrichtung 20 als Durchgangsöffnungen ausgebildet. Als Befestigung für die Dauermagnete 23, 23', 23" sind Rastverbindungen 78 vorgesehen. Die Dauermagnete 23, 23', 23" werden auf einfache Weise in die Öffnungen 74, 74', 74" eingedrückt, bis diese verrasten.

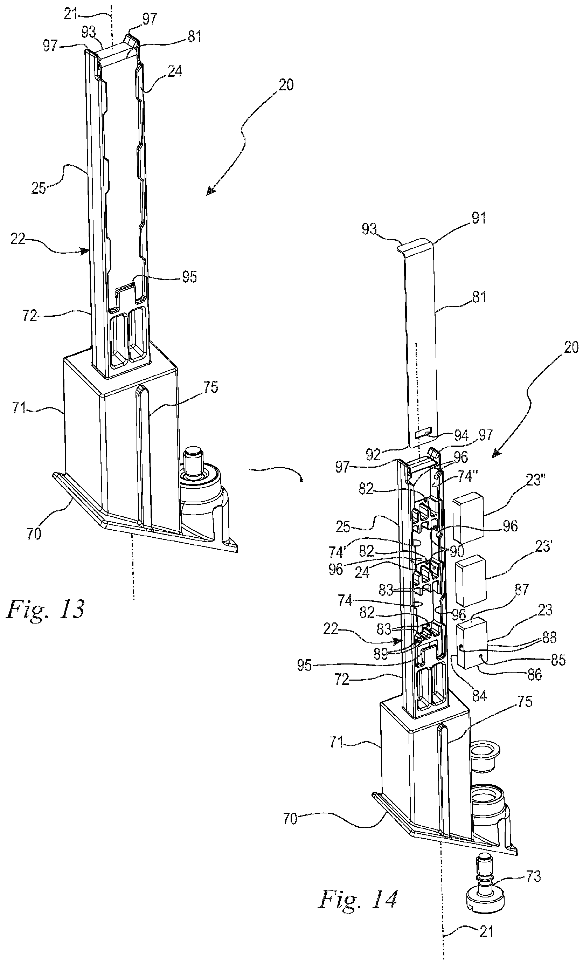

In den Figuren 13 bis 17 ist eine alternative Magnetabscheidervorrichtung 20 gezeigt. Selbe Bezugszeichen zeigen gleiche Bauteile beziehungsweise gleiche Bauelemente. Nachfolgend sollen insbesondere die Unterschiede gegenüber der Magnetabscheidervorrichtung gemäß Figur 9 beschrieben werden.

Wie in Fig. 13 gezeigt, umfasst die Magnetabscheidervorrichtung 20 ein Fixierelement 81 zur Fixierung der Dauermagneten 23, 23', 23" in dem Träger 22. In der Ausführung nach Fig. 13 ist in dem Träger 22 ebenfalls für jeden Dauermagneten 23, 23', 23" eine Öffnung 74, 74', 74" zur Aufnahme der Dauermagneten 23, 23', 23" ausgebildet. Die Öffnung 74, 74', 74" ist vorliegend als Durchgangsöffnung ausgebildet. In einer alternativen Ausführung kann die Öffnung 74, 74', 74" auch einseitig geschlossen ausgebildet sein. Der Träger 22 weist in jeder Öffnung 74, 74', 74" eine Auflagefläche 82 auf, an der der in die Öffnung 74, 74', 74" eingelegte Dauermagnet 23, 23', 23" zur Anlage kommt. In der vorliegenden Ausführung ist die Auflagefläche 82 auf der zweiten Längsseite 25 der Magnetabscheidervorrichtung 20 ausgebildet. Der Dauermagnet 23, 23', 23 "liegt also mit seiner Unterseite 84 an der Auflagefläche 82 der zweiten Längsseite 25 der Magnetabscheidervorrichtung 20 auf. Das Fixierelement 81 ist dazu vorgesehen, dass der Dauermagnet 23, 23', 23" in dem Träger 22 gehalten ist. Ein Herausfallen des Dauermagneten 23, 23', 23" auf der ersten Längsseite 24 der Magnetabscheidervorrichtung 20 soll damit vermieden werden. Das Fixierelement 81 kontaktiert den Dauermagneten 23, 23', 23" an seiner der Unterseite 84 gegenüberliegenden Oberseite 85 und fixiert diesen dadurch in der Öffnung 74, 74', 74" der Magnetabscheidervorrichtung 20. Ein Herausfallen des Dauermagneten 23, 23', 23" aus der Öffnung 74, 74', 74" an der ersten Längsseite 24 der Magnetabscheidervorrichtung 20 ist somit nicht möglich.

Wie in Fig. 14 gezeigt, ist der Dauermagnet 23, 23', 23" an seinen beiden Stirnseiten 86, 87 durch Positionierstege 83 in Richtung der Längsachse 21 der Magnetabscheidervorrichtung 20 gehalten. In der bevorzugten Ausführung sind an dem Träger 22 für die erste Stirnseite 86 des Dauermagneten 23, 23', 23" mindestens zwei zueinander beabstandete Positionierstege 83 vorgesehen. Die Positionierstege 83 weisen jeweils eine Wirkfläche 89 auf, mit der diese die erste Stirnseite 86 des Dauermagneten 23, 23', 23" kontaktieren. Auch für die zweite Stirnseite 87 des Dauermagneten 23, 23', 23" sind mindestens zwei Positionierstege 83 vorgesehen, die mit ihren Wirkflächen 89 die zweite Stirnseite 87 des Dauermagneten 23, 23', 23" kontaktieren. Somit ist an beiden Stirnseiten 86, 87 des Dauermagneten 23, 23', 23" jeweils eine Zweipunktauflage vorgesehen, die eine gute Fixierung des Dauermagneten 23, 23', 23" in dem Träger 22 in Richtung der Längsachse 21 ermöglichen. Zwischen den einzelnen Positionierstegen 83 sind Freiräume vorgesehen. Diese ermöglichen die Aufnahme und / oder Abfuhr von Schmutzpartikeln, so dass sich diese nicht bei der Befestigung der Dauermagneten 23, 23', 23" zwischen Träger 22 und Dauermagnet 23, 23', 23" einklemmen. Eine einfache und sichere Montage der Dauermagneten 23, 23', 23" ist somit auch bei schmutziger Umgebung möglich. Darüber hinaus werden durch die Ausbildung der Positionierstege 83 Materialanhäufungen vermieden. Der Träger 22 ist bevorzugt gegossen, insbesondere spritzgegossen. Durch die Vermeidung entsprechender Materialanhäufungen mittels Ausbildung von Positionierstegen 83 kann ein Verzug bei der Bauteilherstellung vermieden werden. Ferner dienen die Positionierstege 83 auch zum Toleranzausgleich. Muss der Dauermagnet 23, 23', 23" unter Druck zwischen die Positionierstege 83 eingepresst werden, so lassen sich die Positionierstege 83 im Vergleich zu Materialanhäufungen besser verformen.

Wie in Fig. 14 gezeigt, ist der Dauermagnet 23, 23', 23 ` `an seiner jeweiligen Längsseite 88 über zwei zueinander beabstandete Seitenauflagen 90 fixiert. Zwischen den Seitenauflagen 90 ist ebenfalls ein Freiraum gebildet, so dass zwischen den Seitenauflagen 90 der Dauermagnet 23, 23', 23" vom Träger 22 nicht kontaktiert wird. Aus den selbigen, oben beschriebenen Gründen kann somit eine einfache und sichere Montage der Dauermagneten 23, 23', 23" auch bei schmutziger Umgebung erzielt werden.

Wie in Fig. 14 gezeigt, ist das Fixierelement 81 zungenförmig ausgebildet. Das Fixierelement 81 ist auf den Träger 22 der Magnetabscheidervorrichtung 20 aufsteckbar. Ist das Fixierelement 81 auf den Träger 22 aufgesteckt, verdeckt dieses die Dauermagneten 23, 23', 23" zumindest teilweise, insbesondere auf der ersten Längsseite 24 der Magnetabscheidervorrichtung 20 vollständig. Das Fixierelement 81 ist auf dem Träger 22 lösbar befestigt. In der bevorzugten Ausführung ist das Fixierelement 81 durch eine Rastverbindung auf dem Träger 22 gehalten. Die Rastverbindung kann durch den Bediener aufgehoben werden, so dass das Fixierelement 81 von dem Träger wieder gelöst werden kann. Alternativ können auch andere Verbindungen zur Befestigung des Fixierelementes 81 auf dem Träger 22 der Magnetabscheidervorrichtung 20 zweckmäßig sein.

Wie in Fig. 14 gezeigt, erstreckt sich das Fixierelement 81 von einem ersten Ende 91 bis zu einem zweiten Ende 92. An dem ersten Ende 91 ist das Fixierelement 81 gekröpft, wobei die Kröpfung durch eine Art Lasche 93 gebildet ist. An dem zweiten Ende 92 weist das Fixierelement 81 eine Öffnung 94 auf, die zur Aufnahme eines Verrastungshakens 95 vorgesehen ist. Der Verrastungshaken 95 ist an dem Träger 22 ausgebildet.

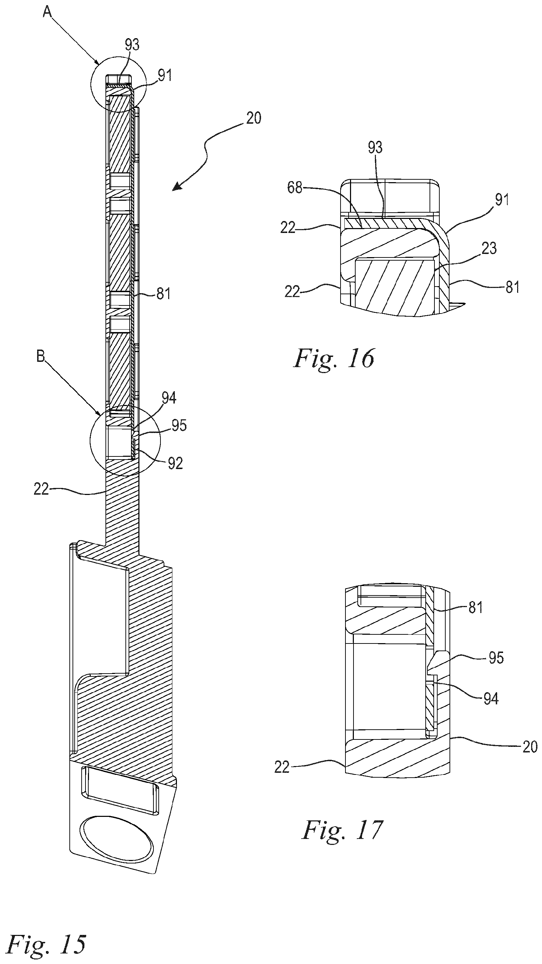

Zur Befestigung der Dauermagneten 23, 23', 23" in dem Träger 22 sind die Dauermagneten 23, 23', 23" in die dafür vorgesehenen Öffnungen 74, 74', 74" einzulegen beziehungsweise einzuschieben, bis diese mit Ihrer Unterseite 84 an der Auflagefläche 82 des Trägers 22 anstoßen. Anschließend ist das Fixierelement 81 mit seinem zweiten Ende 92 voran in den Träger 22 in Richtung der Längsachse 21 einzuschieben. Hierfür ist an der ersten Längsseite 24 des Trägers 22 beziehungsweise der Magnetabscheidervorrichtung 20 eine Führung ausgebildet, in welchem das Fixierelement 81 in den Träger 22 gleitet. Die Führung ist durch mehrere am Träger 22 seitlich angeordnete das Fixierelement 81 übergreifende Laschen 96 gebildet. Das Fixierelement 81 ist beim Einschieben in den Träger 22 zwischen den seitlichen Laschen 96 und den Positionierstegen 83 gehalten. Wie in den Figuren 15 bis 17 gezeigt, ist das Fixierelement 81 soweit in den Träger 22 zu schieben, bis die Lasche 93 an ersten Ende 91 des Fixierelementes 81 an einem Anschlag 68 des Trägers 22 zur Anlage kommt. Darüber hinaus rastet der Verrastungshaken 95 des Trägers 22 in der Öffnung 94 des Fixierelementes 81 ein und fixiert dieses im Träger 22. Die Verrastung kann durch anheben des Verrastungshaken 95 wieder gelöst werden, um das Fixierelement 81 wieder aus dem Träger 22 herauszuziehen. Ferner sind an dem Träger 22 zwei weitere Verrastungshaken 97 ausgebildet, die die Lasche 93 umgreifen und zusätzlich das Fixierelement 81 in der Führung halten (Figuren 13 und 14).

In der bevorzugten Ausführung ist die Fixiervorrichtung 81 aus einem nichtferromagnetischen Werkstoff, um die magnetische Wirkung der Dauermagneten 23, 23', 23" durch Abschirmung oder magnetischer Flussverkettung nicht zu schwächen oder aufzuheben. Die Fixiervorrichtung 81 kann als ein Blech ausgebildet sein. Die Fixiervorrichtung 81 kann auch aus einem Kunststoff bestehen.

## Patentansprüche

1. Elektrisches Arbeitsgerät
umfassend
- ein Gehäuse (2) und einen im Gehäuse (2) angeordneten Antriebsmotor (3), wobei der Antriebsmotor (3) als Elektromotor ausgebildet ist und zum Antrieb eines Werkzeuges (5) des Arbeitsgerätes (1) vorgesehen ist,
- einen im Gehäuse (2) ausgebildeten Kühlluftkanal (10) zur Führung eines Kühlluftstromes (11) zum Kühlen des Antriebsmotors (3),
wobei der Kühlluftkanal (10) einen gekrümmten Kanalabschnitt (12) aufweist,
- eine im Kühlluftkanal (10) angeordnete Magnetabscheidervorrichtung (20) zur Abscheidung ferromagnetischer Partikel aus dem Kühlluftstrom (11),
**dadurch gekennzeichnet, dass** die Magnetabscheidervorrichtung (20) bezogen auf den Kühlluftstrom (11) stromaufwärts des Antriebsmotors (3) in dem gekrümmten Kanalabschnitt (12) des Kühlluftkanals (10) angeordnet ist.

2. Elektrisches Arbeitsgerät nach Anspruch 1,
**dadurch gekennzeichnet, dass** der Kühlluftstrom (11) im gekrümmten Kanalabschnitt (12) eine Hauptströmung (13) aufweist, und die Hauptströmung (13) im Wesentlichen senkrecht zu einer ersten Strömungsebene (41) und senkrecht zu einer zweiten Strömungsebene (42) verläuft, wobei die erste Strömungsebene (41) und die zweite Strömungsebene (42) einen Winkel (α) einschließen, wobei der Winkel (α) mindestens 10°, insbesondere mindestens 30°, insbesondere mindestens 60°, insbesondere mindestens 80° beträgt, und dass sich insbesondere die Magnetabscheidervorrichtung (20) zwischen den beiden Strömungsebenen (41, 42) über einen Winkel (β) erstreckt, der mindestens 10°, insbesondere mindestens 30°, ganz insbesondere mindestens 50° beträgt.

3. Elektrisches Arbeitsgerät nach Anspruch 2,
**dadurch gekennzeichnet, dass** die Magnetabscheidervorrichtung (20) in Richtung der Hauptströmung (13) in der ersten Strömungsebene (41) in Überdeckung mit der Hauptströmung (13) liegt und dass die Magnetabscheidervorrichtung (20) insbesondere entgegen der Richtung der Hauptströmung (13) in der zweiten Strömungsebene (42) in Überdeckung mit der Hauptströmung (13) liegt.

4. Elektrisches Arbeitsgerät nach einem der Ansprüche 1 bis 3,
**dadurch gekennzeichnet, dass** der gekrümmte Kanalabschnitt (12) in seinem Kanalinnenraum (14) im Bereich der Krümmung (15) eine Innenseite (16) und eine Außenseite (17) aufweist, wobei der Abstand zwischen der Magnetabscheidervorrichtung (20) und der Außenseite (17) geringer ist als der Abstand zwischen der Magnetabscheidervorrichtung (20) und der Innenseite (16).

5. Elektrisches Arbeitsgerät nach einem der Ansprüche 2 bis 4,
**dadurch gekennzeichnet, dass** sich die Magnetabscheidervorrichtung (20) entlang einer Längsachse (21) erstreckt und bezogen auf ihre Längsachse (21) in etwa tangential zur Hauptströmung (13) angeordnet ist.

6. Elektrisches Arbeitsgerät nach einem der Ansprüche 1 bis 5,
**dadurch gekennzeichnet, dass** die Magnetabscheidervorrichtung (20) lösbar am Gehäuse (2) gehalten ist.

7. Elektrisches Arbeitsgerät nach einem der Ansprüche 1 bis 6,
**dadurch gekennzeichnet, dass** die Magnetabscheidervorrichtung (20) einen Träger (22) und mindestens einen in/an dem Träger (22) gehaltenen Dauermagneten (23) umfasst.

8. Elektrisches Arbeitsgerät nach Anspruch 7,
**dadurch gekennzeichnet, dass** der gekrümmte Kanalabschnitt (12) eine erste Längsseite (18) und eine der ersten Längsseite (18) gegenüberliegende zweite Längsseite (19) aufweist, wobei die Magnetabscheidervorrichtung (20) derart im gekrümmten Kanalabschnitt (12) angeordnet ist, dass die Magnetabscheidervorrichtung (20) im Bereich des mindestens einen Dauermagneten (23) sowohl an einer der ersten Längsseite (18) des Kanalabschnittes (12) zugewandten ersten Seite (24) der Magnetabscheidervorrichtung (20) als auch an einer der zweiten Längsseite (19) des Kanalabschnittes (12) zugewandten zweiten Seite (25) der Magnetabscheidervorrichtung (20) umströmt werden kann.

9. Elektrisches Arbeitsgerät nach Anspruch 7 oder 8,
**dadurch gekennzeichnet, dass** die Magnetabscheidervorrichtung (20) mehrere Dauermagneten (23, 23', 23"), insbesondere mindestens drei Dauermagneten (23, 23', 23") umfasst, die in Richtung der Längsachse (21) der Magnetabscheidervorrichtung (20) hintereinander angeordnet sind.

10. Elektrisches Arbeitsgerät nach einem der Ansprüche 1 bis 9,
**dadurch gekennzeichnet, dass** das Gehäuse (2) ein Lüftungsgitter (30) mit mindestens einer Einlassöffnung (31) für den Kühlluftstrom (11) umfasst, wobei die Einlassöffnung (31) Teil des Kühlluftkanals (10) ist und in den gekrümmten Kanalabschnitt (12) mündet.

11. Elektrisches Arbeitsgerät nach Anspruch 10,
**dadurch gekennzeichnet, dass** die Einlassöffnung (31) eine Entwässerungsöffnung (32) des Kühlluftkanals (10) bildet.

12. Elektrisches Arbeitsgerät nach Anspruch 10,
**dadurch gekennzeichnet, dass** im Kühlluftkanal (10) im Bereich der Einlassöffnung (31) ein Reservoir (33) zum Auffangen von Schmutzpartikeln vorgesehen ist.
